(19) Europäisches Patentamt
European Patent Office
Office européen des brevets

(11) **EP 3 770 229 B1**

(12) **EUROPEAN PATENT SPECIFICATION**

(45) Date of publication and mention
of the grant of the patent:
**26.06.2024 Bulletin 2024/26**

(21) Application number: **19770982.7**

(22) Date of filing: **05.03.2019**

(51) International Patent Classification (IPC):
*C09J 175/04* $^{(2006.01)}$    *C08G 18/08* $^{(2006.01)}$
*C09J 11/06* $^{(2006.01)}$    *D06N 3/00* $^{(2006.01)}$
*C08G 18/79* $^{(2006.01)}$    *C08G 18/66* $^{(2006.01)}$
*C08G 18/28* $^{(2006.01)}$    *C08G 18/42* $^{(2006.01)}$
*C09J 175/06* $^{(2006.01)}$    *C09J 175/08* $^{(2006.01)}$
*C08G 18/44* $^{(2006.01)}$    *C08G 18/48* $^{(2006.01)}$
*C08G 18/75* $^{(2006.01)}$    *C08G 18/76* $^{(2006.01)}$
*D06N 3/14* $^{(2006.01)}$    *C08G 18/24* $^{(2006.01)}$

(52) Cooperative Patent Classification (CPC):
**C08G 18/4854; C08G 18/0823; C08G 18/0866;
C08G 18/244; C08G 18/282; C08G 18/283;
C08G 18/42; C08G 18/4277; C08G 18/44;
C08G 18/6625; C08G 18/6692; C08G 18/755;
C08G 18/765; C08G 18/797; C09J 175/04;** (Cont.)

(86) International application number:
**PCT/JP2019/008552**

(87) International publication number:
**WO 2019/181476 (26.09.2019 Gazette 2019/39)**

(54) **ADHESIVE AND SYNTHETIC LEATHER**

KLEBSTOFF UND KUNSTLEDER

ADHÉSIF ET CUIR SYNTHÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2018 JP 2018052602**

(43) Date of publication of application:
**27.01.2021 Bulletin 2021/04**

(73) Proprietor: **DIC Corporation
Tokyo 174-8520 (JP)**

(72) Inventor: **TETSUI, Tomohiro
Takaishi-shi, Osaka 592-0001 (JP)**

(74) Representative: **Kraus & Lederer PartGmbB
Thomas-Wimmer-Ring 15
80539 München (DE)**

(56) References cited:
**EP-A1- 3 266 930        JP-A- 2004 002 545
JP-A- 2008 266 520    JP-A- 2008 525 544
JP-A- 2011 184 593    JP-A- 2012 508 798
JP-A- 2014 141 603    JP-A- 2015 003 974
JP-A- 2016 138 206    US-A- 5 610 232
US-B1- 6 730 807**

Remarks:
The file contains technical information submitted after
the application was filed and not included in this
specification

(52) Cooperative Patent Classification (CPC): (Cont.)
   **C09J 175/06; C09J 175/08; D06N 3/145**

## Description

Technical Field

The present invention relates to an adhesive and a synthetic leather obtained by using the same. The invention is set out in the appended set of claims.

Background Art

A urethane resin composition in which a urethane resin is dispersed in an aqueous medium can reduce the environmental load as compared with existing organic solvent-based urethane resin compositions, and therefore, is beginning to be suitably used in recent years as a material for producing a leather-like sheet, such as an artificial leather or a synthetic leather, or a coating agent for gloves, curtains, or bed sheets.

As such a urethane resin composition, a urethane resin composition in which a crosslinking agent, such as an isocyanate crosslinking agent or an oxazoline crosslinking agent, is incorporated in a main agent containing a urethane resin is used for imparting superior peeling strength and durability (for example, see PTLs 1 and 2). However, an isocyanate crosslinking agent gives a short available time (pot life) to a two-component blended liquid of the main agent and the crosslinking agent, making it practically difficult to stably process the urethane resin composition. In addition, regarding an oxazoline crosslinking agent, although the pot life is long, there has also been a problem in that the hardness of a crosslinked film is low and a processed product having a sufficient peeling strength cannot be obtained.

EP 3 266 930 A1 relates to the problem to provide a method for producing leather-like sheets with excellent chemical resistance and discoloration resistance utilizing an aqueous urethane resin composition. As a solution to the problem, the document describes a method for producing a leather-like sheet in the form of a laminate including a film, the method including forming the film by applying an aqueous urethane resin composition onto a substrate and drying the composition, the aqueous urethane resin composition including a urethane resin (A), a nonionic emulsifier (B) and an aqueous medium (C), the urethane resin (A) being one obtained by reacting a polyol (a1) including a carboxyl group-containing polyol (a1-1), an aromatic polyisocyanate (a2) and a chain extender (a3), the urethane resin (A) having a urea bond content of not more than 0.3 mol/kg. The film is preferably used as a skin layer and/or a topcoat layer of the leather-like sheet.

US 6,730,807 B1 describes compounds containing carbodiimide units and carboxyl or carboxylate groups, derived from (a) aliphatic or araliphatic C4 to C20 polyisocyanates (component a), (b) amino carboxylic acids or amino carboxylic salts (component b) and (c) if desired, further compounds which carry groups able to react with isocyanate groups in an addition reaction (component c), (d) if desired, other isocyanates (component d), the carbodiimide units deriving essentially exclusively from the isocyanate groups of component (a).

US 2011/244228 A1 describes an aqueous polyurethane or polyurethane-urea dispersion comprising a polyurethane or a polyurethane polyurea dispersed therein, wherein the polyurethane or polyurethane polyurea comprises terminal carboxyl groups and lateral sulfonate and/or carboxylate groups.

Citation List

Patent Literature

PTL 1: JP-A-2011-184637

PTL 2: JP-A-2013-230613

Summary of Invention

Technical Problem

A problem that the present invention is to solve is to provide an adhesive that has a long available time (pot life) and that can impart superior peeling strength.

Solution to Problem

The present invention provides the adhesive defined in claim 1.

The present invention also provides a synthetic leather characterized by including at least a substrate (i), an adhesive layer (ii) formed of the adhesive, and a surface layer (iii).

Advantageous Effects of Invention

The adhesive of the present invention has a long pot life and can impart superior peeling strength. Accordingly, the adhesive of the present invention can be suitably used in production of a glove, a synthetic leather, a curtain, or a bed sheet, and can be particularly suitably used in production of a synthetic leather.

Description of Embodiments

The adhesive of the present invention is defined in claim 1 and contains an anionic urethane resin (A) having a flow-starting temperature of 100°C or lower and an acid value in the range of 10 to 25 mgKOH/g, a neutralizing agent (B), a carbodiimide crosslinking agent (C), and an aqueous medium (D).

Due to the flow-starting temperature of 100°C or lower, the anionic urethane resin (A) has a good permeability into a substrate and a good adhesion, thus making it possible to obtain superior peeling strength. The flow-starting temperature is preferably in the range of 10 to 60°C in that more superior peeling strength can be obtained.

A major example of a method for adjusting the flow-starting temperature of the anionic urethane resin (A) is a method of adjusting the flow-starting temperature by the type of a polyol (a1), the amount of a chain extender (a2) used, and the type of a polyisocyanate (a3), wherein the polyol (a1), the chain extender (a2), and the polyisocyanate (a3) are starting materials of the urethane resin (A) to be described later. Examples of methods for adjusting the flow-starting temperature to a higher temperature include using a polyol having high crystallinity, such as a polycarbonate polyol, as the polyol (a1), increasing the amount of the chain extender (a2) used, and using a polyisocyanate having high crystallinity, such as 4,4'-diphenylmethane diisocyanate or dicyclohexylmethane diisocyanate, as the polyisocyanate (a3). In addition, examples of methods for adjusting the flow-starting temperature to a lower temperature include using a polyol having low crystallinity, such as polyoxypropylene glycol, as the polyol (a1), decreasing the amount of the chain extender (a2) used, and using a polyisocyanate having low crystallinity, such as toluene diisocyanate or isophorone diisocyanate, as the polyisocyanate (a3). Thus, by appropriately selecting such a method, the flow-starting temperature of the anionic urethane resin (A) can be adjusted. Note that a method for measuring the flow-starting temperature of the anionic urethane resin (A) will be described later in Examples.

In addition, the acid value of the anionic urethane resin (A) is in the range of 10 to 25 mgKOH/g in that the crosslinking density is sufficient and thus the adhesive has a high strength so that more superior peeling strength can be obtained. A major example of a method for adjusting the acid value is a method of adjusting the amount of a compound having a carboxy group or a sulfonyl group to be described later used. Note that a method for measuring the acid value of the anionic urethane resin (A) will be described later in Examples.

The anionic urethane resin (A) can be dispersed in the aqueous medium (D) to be described later due to its anionic group.

An example of a method for obtaining the anionic urethane resin (A) is a method of using, as a starting material, one or more compounds selected from the group consisting of a glycol compound having a carboxy group and a compound having a sulfonyl group.

As the glycol compound having a carboxy group, for example, 2,2-dimethylolpropionic acid, 2,2-dimethylolbutanoic acid, 2,2-dimethylolbutyric acid, 2,2-dimethylolpropionic acid, or 2,2-valeric acid can be used. These compounds may be used alone or in combination of two or more thereof.

As the compound having a sulfonyl group, for example, 3,4-diaminobutanesulfonic acid, 3,6-diamino-2-toluenesulfonic acid, 2,6-diaminobenzenesulfonic acid, or N-(2-aminoethyl)-2-aminoethylsulfonic acid can be used. These compounds may be used alone or in combination of two or more thereof.

When the starting material used for producing the anionic urethane resin (A) is used, the amount of the starting material used is preferably in the range of 0.1 to 8.5% by mass, more preferably in the range of 1 to 7.5% by mass, and further preferably in the range of 2 to 6% by mass in the total mass of the polyol (a1), the starting material used for producing the anionic urethane resin, and the chain extender (a2) in that the acid value of the anionic urethane resin (A) is easily adjusted and more superior peeling strength can be obtained.

As the anionic urethane resin (A), specifically, a reaction product of the polyol (a1), the foregoing starting material used for producing the anionic urethane resin, the chain extender (a2), and the polyisocyanate (a3) can be used.

As the polyol (a1), for example, a polyether polyol, a polyester polyol, a polyacryl polyol, a polycarbonate polyol, or a polybutadiene polyol can be used. These polyols may be used alone or in combination of two or more thereof.

The number average molecular weight of the polyol (a1) is preferably in the range of 500 to 8,000, and more preferably in the range of 800 to 4,000 in terms of the mechanical strength of the resulting film. Note that the number average molecular weight of the polyol (a1) is a value measured by gel permeation chromatography (GPC).

As the chain extender (a2), one having a number average molecular weight in the range of 50 to 450 can be used, and, for example, a chain extender (a2-1) having a hydroxy group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerol, sorbitol, bisphenol A, 4,4'-dihydroxydiphenyl, 4,4'-dihydroxydiphenyl ether, or trimethylolpropane; a chain extender (a2-2) having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, or hydrazine can be used. These chain extenders may be used alone or in combination of two or more thereof.

The amount of the chain extender (a2) used is preferably in the range of 0 to 3% by mass, more preferably in the range of 0 to 2.5% by mass, and further preferably in the range of 0 to 2% by mass in the total mass of the polyol (a1), the starting material used for producing the anionic urethane resin, and the chain extender (a2) in that the flow-starting temperature of the obtained anionic urethane resin (A) is easily adjusted and more superior peeling strength can be obtained.

As the polyisocyanate (a3), for example, an aromatic polyisocyanate (a3-1), such as phenylene diisocyanate, toluene diisocyanate, diphenylmethane diisocyanate, xylylene diisocyanate, naphthalene diisocyanate, polymethylene polyphenyl polyisocyanate, or carbodiimidated diphenylmethane polyisocyanate; an aliphatic polyisocyanate and/or alicyclic polyisocyanate (a3-2), such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, or norbornene diisocyanate can be used. These polyisocyanates may be used alone or in combination of two or more thereof.

The amount of the polyisocyanate (a3) used is preferably in the range of 5 to 40% by mass, and more preferably in the range of 10 to 30% by mass in the total mass of the starting materials of the anionic urethane resin (A) in terms of the production stability and the mechanical properties of the resulting film.

An example of a method for producing the anionic urethane resin (A) is a method in which the polyol (a1), the starting material used for producing the anionic urethane resin, the chain extender (a2), and the polyisocyanate (a3) are put at once and reacted. The reaction may be performed, for example at 50 to 100°C for 3 to 10 hours.

The ratio of the moles of the isocyanate groups of the polyisocyanate (a4) to the total moles of the hydroxy groups of the polyol (a1), the hydroxy groups and amino groups of the starting material used for producing the anionic urethane resin, and the hydroxy groups and amino groups of the chain extender (a3) [isocyanate groups/(hydroxy groups and amino groups)] in production of the anionic urethane resin (A) is preferably in the range of 0.6 to 1.2, and more preferably in the range of 0.7 to 1.1.

When the anionic urethane resin (A) is produced, the isocyanate groups remaining in the anionic urethane resin (A) may be deactivated. When the isocyanate groups are deactivated, an alcohol having one hydroxy group, such as methanol, is preferably used. The amount of the alcohol used is preferably in the range of 0.001 to 10 parts by mass relative to 100 parts by mass of the anionic urethane resin (A).

In addition, an organic solvent may be used in production of the anionic urethane resin (A). As the organic solvent, for example, a ketone compound, such as acetone or methyl ethyl ketone; an ether compound, such as tetrahydrofuran or dioxane; an acetic acid ester compound, such as ethyl acetate or butyl acetate; a nitrile compound, such as acetonitrile; an amide compound, such as dimethylformamide or N-methylpyrrolidone can be used. These organic solvents may be used alone or in combination of two or more thereof. Note that the organic solvent is preferably finally removed by a distillation method.

The neutralizing agent (B) neutralizes the carboxy groups and sulfonyl groups of the anionic urethane resin (A), and, for example, a nonvolatile base, such as sodium hydroxide or potassium hydroxide; a tertiary amine compound, such as trimethylamine, triethylamine, dimethylethanolamine, methyldiethanolamine, or triethanol; a secondary amine compound, such as dimethylamine, diethylamine, or dibutylamine; a primary amine compound, such as ethylenediamine, methylamine, ethylamine, or butylamine; or ammonia can be used. These neutralizing agents may be used alone or in combination of two or more thereof.

The boiling point of the neutralizing agent (B) is preferably 200°C or lower, and more preferably in the range of -50 to 180°C in that the neutralizing agent (B) volatiles at the temperature in drying the aqueous medium (D) in the adhesive (typically 50 to 180°C) to be eliminated from a polyurethane film, and further increases the reactivity of the carboxy group of the anionic urethane resin (A) with the carbodiimide crosslinking agent (C) to be described later, resulting in more superior peeling strength.

The amount of the neutralizing agent (B), when used, is preferably in the range of 0.8 to 1.2 moles per mole of the carboxy groups and sulfonyl groups contained in the anionic urethane resin (A).

The carbodiimide crosslinking agent (C) is produced from a starting material comprising (a) one or more polyisocyanates selected from the group consisting of 1,3-bis(1-methyl-1-isocyanatoethyl)benzene and 1,4-bis(1-methyl-1-isocyanatoethyl)benzene, and (b) a starting material containing a polyalkylene oxide having ethylene groups in an amount of 50% by mass or more in the alkylene groups.

The polyisocyanates may be used alone or in combination of two thereof. One or more polyisocyanates selected from the group consisting of 1,3-bis(1-methyl-1-isocyanatoethyl)benzene and 1,4-bis(1-methyl-1-isocyanatoethyl)benzene are used in that the above polyisocyanates have a longer pot life and show a moderately slow rate of the crosslinking reaction with the anionic urethane resin (A) to thus give more superior processability, and form an isourea through a crosslinking reaction with the anionic urethane resin (A) to thus provide a more hard film and impart more superior peeling strength.

In addition, as the carbodiimide crosslinking agent, besides the polyisocyanates, one produced from a starting material containing a polyalkylene oxide is used in that the solubility in the aqueous medium (D) can be further increased. The polyalkylene oxide is preferably one having at least one group that reacts with the polyisocyanate. The polyalkylene oxide is more preferably one having one group that reacts with the polyisocyanate in that the storage stability of the urethane resin composition can be further increased. In addition, as the alkylene group of the polyalkylene oxide, an ethylene group, a propylene group, or a tetramethylene group can be used. Among them, one having ethylene groups in an amount of 50% by mass or more in the alkylene groups is used in that the solubility in the aqueous medium (D) can be further increased.

The content of the carbodiimide crosslinking agent (C) is preferably in the range of 0.5 to 25 parts by mass, more preferably in the range of 3 to 20 parts by mass, and further preferably in the range of 5 to 18 parts by mass relative to 100 parts by mass of the anionic urethane resin (A) in that more superior peeling strength can be obtained.

As the aqueous medium (D), for example, water, an organic solvent that is miscible with water, and a mixture thereof can be used. As the organic solvent that is miscible with water, for example, an alcohol solvent, such as methanol, ethanol, or n- or iso-propanol; a ketone solvent, such as acetone or methyl ethyl ketone; a polyalkylene glycol solvent, such as ethylene glycol, diethylene glycol, or propylene glycol; an alkyl ether solvent, such as polyalkylene glycol; or a lactam solvent, such as N-methyl-2-pyrrolidone can be used. These aqueous mediums may be used alone or in combination of two or more thereof. Among them, in terms of the safety and the reduction in the environmental load, only water or a mixture of water and an organic solvent that is miscible with water is preferably used, and only water is more preferably used.

In terms of the workability, the ratio by mass of the anionic urethane resin (A) to the aqueous medium (D) [(A)/(D)] is preferably in the range of 10/80 to 70/30, and more preferably in the range of 20/80 to 60/40.

The adhesive of the present invention contains, as essential components, the anionic urethane resin (A), the neutralizing agent (B), the carbodiimide crosslinking agent (C), and the aqueous medium (D), and, as required, may also contain the other additive.

As the other additive, for example, an emulsifier, a thickener, a urethanization catalyst, a filler, a foaming agent, a pigment, a dye, an oil repellent agent, a hollow foam, a flame retardant, a defoaming agent, a leveling agent, or an antiblocking agent can be used. These additives may be used alone or in combination of two or more thereof.

Next, the synthetic leather of the present invention will be described.

The synthetic leather includes at least a substrate (i), an adhesive layer (ii) formed of the adhesive, and a surface layer (iii).

As the substrate (i), for example, a glass; a plastic substrate; a wood; or a fiber substrate, such as a nonwoven fabric, a woven fabric, or a knitted fabric, can be used. Among them, a fiber substrate is preferably used in that a good softness can be obtained. As a material constituting the fiber substrate, for example, a polyester fiber, a nylon fiber, an acrylic fiber, an acetate fiber, a rayon fiber, a polylactic acid fiber, cotton, hemp, silk, wool, or a mixed spinning fiber can be used.

The adhesive layer (ii) is formed of the adhesive, and the thickness thereof is, for example, in the range of 5 to 100 $\mu$m.

Between the adhesive layer (ii) and the surface layer (iii), an intermediate layer formed of a known material may be provided as required.

The surface layer (iii) is formed of a known material, and the thickness thereof is, for example, in the range of 5 to 100 um. A surface treatment layer may be provided on the surface layer (iii) as required.

As the known material that can be used for forming the intermediate layer, the surface layer (iii), and the surface treatment layer, for example, a solvent-free urethane resin composition, such as a moisture-curing hotmelt resin, an aqueous urethane resin composition in which a urethane resin is dispersed in water, an aqueous acrylic resin composition in which an acrylic resin is dispersed in water, a solvent-based urethane resin composition, or a solvent-based acrylic resin composition can be used.

Next, a method of producing the synthetic leather of the present invention will be described.

An example of a method of producing the synthetic leather is a method in which a resin composition for forming a surface layer is applied on a release paper and is dried to form the surface layer (iii), then the adhesive is applied on the surface layer and is dried to form the adhesive layer (ii), and the adhesive layer (ii) is bonded to the substrate (i).

An example of a method for applying the resin composition for forming the surface layer or the adhesive is a method using a roll coater, a knife coater, a comma coater, or an applicator.

Regarding the drying condition in formation of the surface layer (iii) and the adhesive layer (ii), for example, a method of drying at 40 to 120°C for 10 minutes to 3 days is exemplified.

The adhesive of the present invention has a long pot life, and can impart superior peeling strength as described above. Accordingly, the adhesive of the present invention can be suitably used in production of gloves, a synthetic leather, a curtain, or a bed sheet, and can be particularly suitably used in production of a synthetic leather.

Examples

The present invention will be described in detail below with reference to examples.

[Example 1]

In the presence of 1,374 parts by mass of methyl ethyl ketone and 0.1 parts by mass of stannous octanoate, 1,000 parts by mass of a polyether polyol ("PTMG 1000" manufactured by Mitsubishi Chemical Corporation, number average molecular weight; 1,000), 57 parts by mass of 2,2-dimethylolpropionic acid, and 317 parts by mass of isophorone diisocyanate were reacted at 70°C until the viscosity of the solution reached 20,000 mPa·s. Subsequently, 3 parts by mass of methanol was added to terminate the reaction, thereby obtaining a solution of an anionic urethane resin in methyl ethyl ketone. Into the urethane resin solution, 69 parts by mass of polyoxyethylene distyrenated phenyl ether (hydrophile-lipophile balance (hereinafter abbreviated as "HLB"): 13) and 38 parts by mass of triethylamine (neutralizing agent; boiling point: 89.5°C) were mixed, and then 2,748 parts by mass of ion exchange water was added to effect phase-transfer emulsification, thereby obtaining an emulsion in which the anionic urethane resin was dispersed in water.

Then, methyl ethyl ketone was distilled from the emulsion to thereby obtain a urethane resin composition having a nonvolatile content of 35% by mass. Note that the anionic urethane resin had a flow-starting temperature of 40°C or lower and an acid value of 17.4 mgKOH/g.

Into 100 parts by mass of the obtained urethane resin composition, 1 part by mass of a thickening agent ("Borchi Gel 0620" manufactured by Borchers) and 9 parts by mass of a carbodiimide crosslinking agent (produced from a starting material containing 1,3-bis(1-methyl-1-isocyanatoethyl)benzene and polyalkylene glycol monomethyl ether, solid content: 40% by mass, hereinafter abbreviated as "crosslinking agent (1)") were put, and the mixture was stirred with a mechanical mixer at 2,000 rpm for 2 minutes, and was deaerated with a vacuum deaerator, thereby obtaining an adhesive.

[Method for Measuring Flow-starting Temperature of Anionic Urethane Resin (A)]

The urethane resin composition before blending a crosslinking agent was applied on a release paper (application thickness: 150 $\mu$m), and was dried with a hot air drier at 70°C for 2 minutes and then at 120°C for 2 minutes, thereby obtaining a dried product. The dried product was measured for the flow-starting temperature using a flow tester "CFT-500A" manufactured by Shimadzu Corporation (a dice with a caliber of 1 mm and a length of 1 mm was used, load: 98 N, temperature rising rate: 3°C/minute).

[Method for Measuring Acid Value of Anionic Urethane Resin (A)]

The urethane resin composition before blending a crosslinking agent was dried and 0.05 g to 0.5 g of the dry solidified resin particles were weighed into a 300 mL Erlenmeyer flask, and then, about 80 mL of a mixed solvent of tetrahydrofuran and ion exchange water having a mass ratio [tetrahydrofuran/ion exchange water] of 80/20 was added to obtain a mixture liquid thereof.

Then, after addition of phenol phthalein indicator to the mixture liquid, the mixture liquid was titrated with an 0.1 mol/L aqueous potassium hydroxide solution whose concentration was precisely determined in advance, and the acid value (mgKOH/g) of the aqueous urethane resin (A) was determined according the following calculation formula (1) based on the amount of the aqueous potassium hydroxide solution used in the titration.

$$\text{Calculation formula: A} = (B \times f \times 5.611) / S \ (1)$$

In the formula, A is the acid value (mgKOH/g) of the resin solid component, B is the amount of the 0.1 mol/L aqueous potassium hydroxide solution (mL) used in the titration, f is the factor of the 0.1 mol/L aqueous potassium hydroxide solution, S is the mass of the resin particles (g), and 5.611 is the formula weight of potassium hydroxide (56.11/10).

[Example 2]

An adhesive was obtained in the same manner as in Example 1 except for changing the polyether polyol to a polyester polyol ("ETERNACOLL UH-100" manufactured by Ube Industries, Ltd., number average molecular weight: 1,000). Note that the anionic urethane resin had a flow-starting temperature of 40°C or lower and an acid value of 17.2 mgKOH/g.

[Example 3]

An adhesive was obtained in the same manner as in Example 1 except for changing the polyether polyol to a polyester polyol ("PLACCEL 210" manufactured by Daicel Corporation, number average molecular weight: 1,000). Note that the anionic urethane resin had a flow-starting temperature of 40°C or lower and an acid value of 17.2 mgKOH/g.

[Example 4]

In the presence of 1,374 parts by mass of methyl ethyl ketone and 0.1 parts by mass of stannous octanoate, 1,000 parts by mass of a polyether polyol ( "PTMG 1000" manufactured by Mitsubishi Chemical Corporation, number average molecular weight: 1,000), 57 parts by mass of 2,2-dimethylolpropionic acid, and 317 parts by mass of isophorone diisocyanate were reacted at 70°C until the viscosity of the solution reached 20,000 mPa·s, and then 3 parts by mass of methanol was added to terminate the reaction, thereby obtaining a solution of an anionic urethane resin in methyl ethyl ketone. Into the urethane resin solution, 69 parts by mass of polyoxyethylene distyrenated phenyl ether (hydrophile-lipophile balance (hereinafter abbreviated as "HLB"): 13) and 61 parts by mass of tripropylamine (neutralizing agent; boiling point: 156°C) were mixed, and then 2,748 parts by mass of ion exchange water was added to effect phase-transfer emulsification, thereby obtaining an emulsion in which the anionic urethane resin was dispersed in water.

Then, methyl ethyl ketone was distilled from the emulsion to thereby obtain a urethane resin composition having a nonvolatile content of 35% by mass. Note that the anionic urethane resin had a flow-starting temperature of 40°C or lower and an acid value of 17.4 mgKOH/g.

[Example 5]

In the presence of 1,374 parts by mass of methyl ethyl ketone and 0.1 parts by mass of stannous octanoate, 1,000 parts by mass of a polyether polyol ("PTMG 1000" manufactured by Mitsubishi Chemical Corporation, number average molecular weight: 1,000), 57 parts by mass of 2,2-dimethylolpropionic acid, and 317 parts by mass of isophorone diisocyanate were reacted at 70°C until the viscosity of the solution reached 40,000 mPa·s, and then 3 parts by mass of methanol was added to terminate the reaction, thereby obtaining a solution of an anionic urethane resin in methyl ethyl ketone. Into the urethane resin solution, 69 parts by mass of polyoxyethylene distyrenated phenyl ether (hydrophile-lipophile balance (hereinafter abbreviated as "HLB"): 13) and 38 parts by mass of triethylamine (neutralizing agent; boiling point: 89.5°C ) were mixed, and then 2,748 parts by mass of ion exchange water was added to effect phase-transfer emulsification, thereby obtaining an emulsion in which the anionic urethane resin was dispersed in water.

Then, methyl ethyl ketone was distilled from the emulsion to thereby obtain a urethane resin composition having a nonvolatile content of 35% by mass. Note that the anionic urethane resin had a flow-starting temperature of 52°C and an acid value of 17.4 mgKOH/g.

Into 100 parts by mass of the obtained urethane resin composition, 1 part by mass of a thickening agent ("Borchi Gel 0620" manufactured by Borchers) and 9 parts by mass of a carbodiimide crosslinking agent (1) were put, and the mixture was stirred with a mechanical mixer at 2,000 rpm for 2 minutes, and was deaerated with a vacuum deaerator, thereby obtaining an adhesive.

[Example 6]

In the presence of 1,418 parts by mass of methyl ethyl ketone and 0.1 parts by mass of stannous octanoate, 1,000 parts by mass of a polyether polyol ("PTMG1000" manufactured by Mitsubishi Chemical Corporation, number average molecular weight: 1,000), 74 parts by mass of 2,2-dimethylolpropionic acid, and 345 parts by mass of isophorone diisocyanate were reacted at 70°C until the viscosity of the solution reached 20,000 mPa·s, and then 3 parts by mass of methanol was added to terminate the reaction, thereby obtaining a solution of an anionic urethane resin in methyl ethyl ketone. Into the urethane resin solution, 69 parts by mass of polyoxyethylene distyrenated phenyl ether (hydrophile-lipophile balance (hereinafter abbreviated as "HLB"): 13) and 38 parts by mass of triethylamine (neutralizing agent; boiling point: 89.5°C ) were mixed, then 2,836 parts by mass of ion exchange water was added to effect phase-transfer emulsification, thereby obtaining an emulsion in which the anionic urethane resin was dispersed in water.

Then, methyl ethyl ketone was distilled from the emulsion to thereby obtain a urethane resin composition having a nonvolatile content of 35% by mass. Note that the anionic urethane resin had a flow-starting temperature of 40°C or lower and an acid value of 21.8 mgKOH/g.

Into 100 parts by mass of the obtained urethane resin composition, 1 part by mass of a thickening agent ("Borchi Gel 0620" manufactured by Borchers) and 12 parts by mass of a crosslinking agent (1) were put, and the mixture was stirred with a mechanical mixer at 2,000 rpm for 2 minutes, and was deaerated with the vacuum deaerator, thereby obtaining an adhesive.

[Comparative Example 1]

An adhesive was obtained in the same manner as in Example 1 except that the carbodiimide crosslinking agent was not used in Example 1.

[Comparative Example 2]

An adhesive was obtained in the same manner as in Example 1 except that an oxazoline crosslinking agent ("EPOCROS WS-700" manufactured by Nippon Shokubai Co., Ltd., solid content: 25% by mass) was used in place of the carbodiimide crosslinking agent in Example 1.

[Comparative Example 3]

In the presence of 4,121 parts by mass of methyl ethyl ketone and 0.1 parts by mass of stannous octanoate, 1,000 parts by mass of a polyether polyol ("PTMG1000" manufactured by Mitsubishi Chemical Corporation, number average molecular weight: 1,000), 57 parts by mass of 2,2-dimethylolpropionic acid, and 317 parts by mass of isophorone diisocyanate were reacted at 70°C until the viscosity of the solution reached 100,000 mPa·s, and then 3 parts by mass of methanol was added to terminate the reaction, thereby obtaining a solution of an anionic urethane resin in methyl ethyl ketone. Into the urethane resin solution, 69 parts by mass of polyoxyethylene distyrenated phenyl ether (hydrophile-lipophile balance (hereinafter abbreviated as "HLB"): 13) and 38 parts by mass of triethylamine (neutralizing agent; boiling point: 89.5°C) were mixed, and then 5,495 parts by mass of ion exchange water was added to effect phase-transfer emulsification, thereby obtaining an emulsion in which the anionic urethane resin was dispersed in water.

Then, methyl ethyl ketone was distilled from the emulsion to thereby obtain a urethane resin composition having a nonvolatile content of 35% by mass. Note that the anionic urethane resin had a flow-starting temperature of 110°C and an acid value of 17.4 mgKOH/g.

Into 100 parts by mass of the obtained urethane resin composition, 1 part by mass of a thickening agent ("Borchi Gel 0620" manufactured by Borchers) and 9 parts by mass of a crosslinking agent (1) were put, and the mixture was stirred with a mechanical mixer at 2,000 rpm for 2 minutes and was deaerated with a vacuum deaerator, thereby obtaining an adhesive.

[Preparation Example 1] Preparation of Formulation Liquid for Surface Layer

100 parts by mass of an ether-based urethane dispersion ("HYDRAN WLS-120AR" manufactured by DIC Corporation, 2 parts by mass of a thickening agent ("Borch Gel ALA" manufactured by Borcher), 0.2 parts by mass of a leveling agent ("TEGO Flow 425" manufactured by Evonik), 0.2 parts by mass of a defoaming agent ("TEGO Twin 4000" manufactured by Evonik), and 5 parts by mass of a black pigment ("DILAC HS-9550" manufactured by DIC Corporation) were stirred with a mechanical mixer at 2,000 rpm for 2 minutes, and was then deaerated using a vacuum deaerator to thereby obtain a formulation liquid for a surface layer.

[Method of Producing Synthetic Leather]

On a release paper ("EK-100D" manufactured by Lintec Corporation), the formulation liquid for a surface layer was applied with a knife coater (application thickness: 150 pm), and then was dried using a hot air drier at 70°C for 2 minutes and then at 120°C for 2 minutes, thereby obtaining a surface layer. The adhesives obtained in Examples and Comparative Examples were each further applied on the surface layer with a knife coater (application thickness: 150 pm), and then was dried using a hot air drier at 70°C for 6 minutes. Finally, the nonwoven fabric substrate was superimposed on the dried product, and this assembly was then heat bonded by hot roll press (roll temperature: 100°C, press line pressure: 3 MPa/m², feed rate: 1 m/min) and was further subjected to aging with a hot air drier at 70°C for 2 days, thereby obtaining a synthetic leather.

[Method for Measuring Number Average Molecular Weight]

As the number average molecular weights of polyols and the like used in Examples and Comparative Examples, values measured by gel permeation chromatography (GPC) under the following conditions are shown.

Measurement Apparatus: High Speed GPC Apparatus ("HLC-8220GPC" manufactured by TOSOH Corporation)

Column: the following columns manufactured by TOSOH Corporation were directly connected and used.

"TSKgel G5000" (7.8 mm I.D. × 30 cm) × 1

"TSKgel G4000" (7.8 mm I.D. × 30 cm) × 1

"TSKgel G3000" (7.8 mm I.D. × 30 cm) × 1

"TSKgel G2000" (7.8 mm I.D. × 30 cm) × 1

Detector: RI (refractive index detector)

Column temperature: 40°C

Eluent: tetrahydrofuran (THF)

Flow rate: 1.0 mL/minute

Injection: 100 μL (tetrahydrofuran solution having sample concentration of 0.4% by mass)

Standard samples: the following standard polystyrenes were used to create a calibration curve.

(Standard polystyrenes)

"TSKgel standard polystyrene A-500" manufactured by TOSOH Corporation

"TSKgel standard polystyrene A-1000" manufactured by TOSOH Corporation

"TSKgel standard polystyrene A-2500" manufactured by TOSOH Corporation

"TSKgel standard polystyrene A-5000" manufactured by TOSOH Corporation

"TSKgel standard polystyrene F-1" manufactured by TOSOH Corporation

"TSKgel standard polystyrene F-2" manufactured by TOSOH Corporation

"TSKgel standard polystyrene F-4" manufactured by TOSOH Corporation

"TSKgel standard polystyrene F-10" manufactured by TOSOH Corporation

"TSKgel standard polystyrene F-20" manufactured by TOSOH Corporation

"TSKgel standard polystyrene F-40" manufactured by TOSOH Corporation

"TSKgel standard polystyrene F-80" manufactured by TOSOH Corporation

"TSKgel standard polystyrene F-128" manufactured by TOSOH Corporation

"TSKgel standard polystyrene F-288" manufactured by TOSOH Corporation

"TSKgel standard polystyrene F-550" manufactured by TOSOH Corporation

[Method for Evaluating Pot Life]

In Examples and Comparative Examples, the viscosities of the adhesive at 10 minutes and at 3 days after blending the crosslinking agent were measured (Brookfield Viscometer, 10P corn, rotor revolution; 50 rpm). The case where the increasing rate of the viscosity after 3 days to the viscosity after 10 minutes was 0.5 to 2 times the increasing rate before blending the crosslinking agent was evaluated as "○", and the case where the former was less than 0.5 times or more than 2 times the latter was evaluated as "×".

[Method for Evaluating Peeling Strength]

A hot melt tape ("BW-2" manufactured by Sun Chemical, Ltd.) having a width of 2.5 cm was placed on a surface of the synthetic leather and was heated at 150°C for 30 seconds to bond the hot melt tape. Then, the sample was cut along the width of the hot melt tape. The sample was partially peeled, and the substrate and the hot melt tape were clipped with a chuck, and the peeling strength was measured using a tensile tester "Autograph AG-I" (manufactured by Shimadzu Corporation) (hereinafter abbreviated as "initial peeling strength"). The average of the obtained data (n=3) was determined and was converted based on 1 cm width (unit: kgf/cm).
In addition, in Examples and Comparative Examples, a synthetic leather which was produced at 6 hours after blending the crosslinking agent was evaluated in the same manner, and the obtained peeling strength was taken as a "peeling strength at 6 hours after blending".

[Table 1]

| Table 1 | | Example 1 | Example 2 | Example 3 | Example 4 | Example 5 |
|---|---|---|---|---|---|---|
| Anionic urethane resin (A) | | | | | | |
| Flow-starting temperature (°C) | | 40°C or lower | 40°C or lower | 40°C or lower | 40°C or lower | 52°C |
| Acid value (mgKOH/g) | | 17.4 | 17.4 | 17.4 | 17.4 | 17.4 |
| Neutralizing agent (B) | | Triethylamine | Triethylamine | Triethylamine | Tripropylamine | Triethylamine |
| Carbodiimide crosslinking agent (C) | | Crosslinking agent (1) | Crosslinking agent (1) | Crosslinking agent (1) | Crosslinking agent (1) | Crosslinking agent (1) |
| Evaluation of pot life | | ○ | ○ | ○ | ○ | ○ |
| Evaluation of peeling strength | Initial | 3.2 | 3.6 | 3.4 | 3.1 | 2.9 |
| | 6 Hours after blending | 3.5 | 3.9 | 3.6 | 3.3 | 3.1 |

[Table 2]

| Table 2 | Example 6 | Comparative Example 1 | Comparative Example 2 | Comparative Example 3 |
|---|---|---|---|---|
| Anionic urethane resin (A) | | | | |
| Flow-starting temperature (°C) | 40°C or lower | 40°C or lower | 40°C or lower | 110 |
| Acid value (mgKOH/g) | 21.8 | 17.2 | 17.2 | 17.4 |
| Neutralizing agent (B) | Triethylamine | Triethylamine | Triethylamine | Triethylamine |

(continued)

| Table 2 | | Example 6 | Comparative Example 1 | Comparative Example 2 | Comparative Example 3 |
|---|---|---|---|---|---|
| Carbodiimide crosslinking agent (C) | | Crosslinking agent (1) | | Oxazoline crosslinking agent | Crosslinking agent (1) |
| Evaluation of pot life | | ○ | ○ | ○ | ○ |
| Evaluation of peeling strength | Initial | 3.4 | 0.1 | 2 | 0.2 |
| | 6 Hours after blending | 3.5 | 0 | 1.8 | 0.1 |

The adhesives of the present invention had a long available time (pot life) and were able to impart superior peeling strength.

On the other hand, Comparative Example 1, which was embodiment of containing no carbodiimide crosslinking agent (C), was insufficient in the peeling strength.

Comparative Example 2, which was an embodiment of using an oxazoline crosslinking agent in place of the carbodiimide crosslinking agent (C), was insufficient in the peeling strength.

Comparative Example 3, which was an embodiment of using an anionic urethane resin having a flow-starting temperature beyond the range defined in the present invention, was insufficient in the peeling strength.

**Claims**

1. An adhesive comprising an anionic urethane resin (A) having a flow-starting temperature of 100°C or lower and an acid value in the range of 10 to 25 mgKOH/g, a neutralizing agent (B), a carbodiimide crosslinking agent (C), and an aqueous medium (D),

wherein the carbodiimide crosslinking agent (C) is produced from a starting material comprising

(a) one or more polyisocyanates selected from the group consisting of 1,3-bis(1-methyl-1-isocyanatoethyl)benzene and 1,4-bis(1-methyl-1-isocyanatoethyl)benzene, and
(b) a starting material containing a polyalkylene oxide having ethylene groups in an amount of 50% by mass or more in the alkylene groups,

and wherein the flow-starting temperature is measured as follows: the urethane resin composition before blending a crosslinking agent is applied on a release paper at an application thickness of 150 um and is dried with a hot air drier at 70°C for 2 minutes and then at 120°C for 2 minutes, thereby obtaining a dried product; the dried product is measured for the flow-starting temperature using a flow tester having a dice with a caliber of 1 mm and a length of 1 mm, at a load of 98 N and a temperature rising rate of 3°C/minute.

2. The adhesive according to claim 1, wherein the neutralizing agent (B) has a boiling point of 200°C or lower.

3. The adhesive according to claim 1 or 2, wherein the carbodiimide crosslinking agent (C) is contained in an amount in the range of 0.5 to 25 parts by mass relative to 100 parts by mass of the anionic urethane resin (A).

4. A synthetic leather comprising at least a substrate (i), an adhesive layer (ii) formed of the adhesive according to any one of claims 1 to 3, and a surface layer (iii).

**Patentansprüche**

1. Klebstoff, umfassend ein anionisches Urethanharz (A) mit einer Fließbeginntemperatur von 100°C oder weniger und einer Säurezahl im Bereich von 10 bis 25 mgKOH/g, ein Neutralisationsmittel (B), ein Carbodiimid-Vernetzungsmittel (C) und ein wässriges Medium (D),

wobei das Carbodiimid-Vernetzungsmittel (C) aus einem Ausgangsmaterial hergestellt wird, das Folgendes umfasst

(a) ein oder mehrere Polyisocyanate ausgewählt aus der Gruppe bestehend aus 1,3-Bis(1-methyl-1-isocyanatoethyl)benzol und 1,4-Bis(1-methyl-1-isocyanatoethyl)benzol, und
(b) ein Ausgangsmaterial, das ein Polyalkylenoxid mit Ethylengruppen in einer Menge von 50 Massenprozent oder mehr an den Alkylengruppen enthält,

und wobei die Fließbeginntemperatur wie folgt gemessen wird: die Urethanharzzusammensetzung wird vor dem Mischen eines Vernetzungsmittels auf ein Trennpapier mit einer Auftragsdicke von 150 $\mu$m aufgetragen und mit einem Heißlufttrockner bei 70°C für 2 Minuten und dann bei 120°C für 2 Minuten getrocknet, wodurch ein getrocknetes Produkt erhalten wird; das getrocknete Produkt wird für die Fließbeginntemperatur unter Verwendung eines Fließprüfers mit einem Würfel mit einem Kaliber von 1 mm und einer Länge von 1 mm bei einer Belastung von 98 N und einer Temperaturanstiegsrate von 3°C/Minute gemessen.

2. Klebstoff nach Anspruch 1, wobei das Neutralisationsmittel (B) einen Siedepunkt von 200°C oder niedriger hat.

3. Klebstoff nach Anspruch 1 oder 2, wobei das Carbodiimid-Vernetzungsmittel (C) in einer Menge im Bereich von 0,5 bis 25 Masseteilen, bezogen auf 100 Masseteile des anionischen Urethanharzes (A), enthalten ist.

4. Kunstleder, das mindestens ein Substrat (i), eine Klebstoffschicht (ii), die aus dem Klebstoff nach einem der Ansprüche 1 bis 3 gebildet ist, und eine Oberflächenschicht (iii) umfasst.

**Revendications**

1. Adhésif comprenant une résine uréthane anionique (A) dont la température de début d'écoulement est inférieure ou égale à 100° C et dont l'indice d'acidité est compris entre 10 et 25 mgKOH/g, un agent neutralisant (B), un agent de réticulation carbodiimide (C) et un milieu aqueux (D),

dans lequel l'agent de réticulation carbodiimide (C) est produit à partir d'un matériau de départ comprenant

(a) un ou plusieurs polyisocyanates choisis dans le groupe constitué par le 1,3-bis(1-méthyl-1-isocyanatoéthyl)benzène et le 1,4-bis(1-méthyl-1-isocyanatoéthyl)benzène, et
(b) un matériau de départ contenant un oxyde de polyalkylène ayant des groupes éthylène en quantité égale ou supérieure à 50 % en masse des groupes alkylène,

et dans lequel la température de début d'écoulement est mesurée comme suit : la composition de résine uréthane avant mélange d'un agent de réticulation est appliquée sur un papier de démoulage à une épaisseur d'application de 150 um et est séchée avec un séchoir à air chaud à 70° C pendant 2 minutes puis à 120° C pendant 2 minutes, obtenant ainsi un produit séché ; le produit séché est mesuré pour la température de début d'écoulement à l'aide d'un testeur d'écoulement ayant un dé d'un calibre de 1 mm et d'une longueur de 1 mm, sous une charge de 98 N et une vitesse d'élévation de la température de 3 °C/minute.

2. Adhésif selon la revendication 1, dans lequel l'agent neutralisant (B) a un point d'ébullition de 200° C ou moins.

3. Adhésif selon la revendication 1 ou 2, dans lequel l'agent de réticulation carbodiimide (C) est contenu dans une quantité comprise entre 0,5 et 25 parties en masse par rapport à 100 parties en masse de la résine uréthane anionique (A).

4. Cuir synthétique comprenant au moins un substrat (i), une couche adhésive (ii) formée de l'adhésif selon l'une des revendications 1 à 3, et une couche de surface (iii) .

**EP 3 770 229 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3266930 A1
- US 6730807 B1
- US 2011244228 A1
- JP 2011184637 A
- JP 2013230613 A